# EUROPEAN PATENT SPECIFICATION

(11) **EP 3 445 173 B1**
(45) Date of publication and mention of the grant of the patent: **22.09.2021**
(21) Application number: 17727401.6
(22) Date of filing: 24.04.2017
(51) Int. Cl.: A21C 9/08, A21B 1/24, A21B 1/26, A21C 13/00, A21C 13/02

(54) **FOOD PROCESSING ASSEMBLY**
LEBENSMITTELVERARBEITUNGSANORDNUNG
ENSEMBLE DE TRAITEMENT D'ALIMENTS

(30) Priority: 22.04.2016 NL 2016664
(43) Date of publication of application: 27.02.2019
(73) Proprietor: Kaak Groep B.V., 7061 GA Terborg (NL)
(72) Inventor: BULSINK, Jan Jacob, 7061 GA Terborg (NL); VAN DE POL, Aalt, 7061 GA Terborg (NL)
(74) Representative: Peters, Sebastian Martinus
(86) International application number: PCT/NL2017/050263
(87) International publication number: WO 2017/183986

(56) References cited:
- EP-A2- 1 820 401
- WO-A1-2010/014006
- DE-A1- 2 459 479
- DE-U1- 8 522 780

## Description

### BACKGROUND

The invention relates to a food processing assembly comprising a multi-storey food processing apparatus for food products, in particular dough products, and a number of carriers suitable for supporting the food products in said food processing apparatus. The invention further relates to a multi-storey food processing apparatus, and to carriers for supporting food products. Such an apparatus and carrier are known form DE2459479.

In the food industry, particularly bakeries and other enterprises producing dough products, use is made of large, elongated food processing apparatuses in which the dough containing products are processed in multiple storeys, while being conveyed within a particular storey from an entrance at a first side of the food processing apparatus to an exit at a second side of said food processing apparatus situated opposite the first side. Examples of such food processing apparatuses are ovens and cooling cabinets.

Such a multi-storey food processing apparatus is for example described in International Patent Application WO 2010/014006. The food processing apparatus described herein is an oven which comprises a number of storeys situated above one another, wherein each storey forms a separate dough treatment space. The several storeys are separated and isolated from one another. Each storey is provided with an entrance for passing carriers for dough pieces and/or bakery products into said storey, an exit passing said carriers out of said storey, and a guidance device for guiding the carriers in a particular storey through the oven from the entrance to the exit. In addition, each one of the storeys is provided with upper heating elements and lower heating elements in between which the carriers for dough pieces and/or bakery products can be passed. As a result the temperature can be set and controlled for each storey individually. Although the individual control of the baking parameters for each individual storey is usually considered an advantage, it can also provide problems in case it is desired that the baking parameters for several storeys are substantially the same for producing uniform and/or substantially identical dough product from each one of said several storeys. For the multi-storey food processing apparatus as described in WO 2010/014006 this requires, *inter alia,* an accurate temperature control of the upper heating elements and lower heating elements of each one of said several storeys, and also an accurate control of the loading and unloading of carriers in each one of said several storeys in order to provide a substantial equal lingering time of each carrier with dough products in the oven.

It is an object of the present invention to ameliorate one or more of these problems or to at least provide an alternative multi-storey food processing apparatus for food products, such as dough products.

### SUMMARY OF THE INVENTION

According to a first aspect, the invention provides a food processing assembly in accordance with claim 1.

In order to obtain substantially equal processing parameters for multiple storeys of said multi-storey food processing apparatus, the food processing apparatus of the present invention is arranged to facilitate a substantial vertical air flow through multiple storeys or multiple levels of said food processing apparatus. However, when the carriers for food products are loaded in a particular storey or level of the food processing apparatus, the support member and/or any food products on said support member obstruct the vertical flow of air and push the air to a more horizontal direction along the particular storey. By providing the carriers with an air guiding plate at the leading and/or trailing end, the air guiding plate obstructs a horizontal flow of air through the particular storey and guides at least part of the air in a vertical direction to a neighbouring storey above or below said particular storey. Due to the air guiding plates of the carriers, a more vertical air flow through said multi-storey food processing apparatus is obtain, which improves the production of more uniform and/or substantially identical food products from each one of said several storeys.

It is noted that the leading and trailing end of the carriers relate to the direction in which the carriers are transported through a storey of the multi-storey food processing apparatus. In particular, when the carriers are guided from the entrance to the exit of a specific storey of the food processing apparatus, the leading end is facing to the forward moving direction.

In an embodiment, the carrier comprises an air guiding opening adjacent to the air guiding plate for facilitating an air flow from an upper side of the carrier to a lower side of the carrier or from the lower side of the carrier to the upper side of the carrier. In an embodiment, the air guiding opening is provided between the support member and the air guiding plate. By arranging one or more air guiding openings adjacent to the air guiding plate, the air guiding openings are arranged substantially in the flow path of air guided along said air guiding plates which facilitates the vertical air flow through the multiple storeys of the food processing apparatus.

In an embodiment, the air guiding plate extends substantially over the full width of the leading and/or trailing edge of the carrier. Each storey of the multi-storey food processing apparatus is provides a passage for the carriers which passage extends from the entrance to exit of a specific storey. Preferably the passages for the various storeys of the multi-storey food processing apparatus are substantially equal in size. Usually the carriers extend over substantially the full width of the passage through the food processing apparatus. Accordingly, the air guiding plate of this embodiment is arranged to extend over the full width of the passage and substantially obstructs an air flow between the air guiding plate and the inner side walls of the passage.

In an embodiment, the height of the air guiding plate above the support member is equal or larger than 50 % of the distance between the support member of a carrier arranged in a storey of the food processing apparatus and the upper heat exchange elements of said storey. Preferably the height of the air guiding plate above the support member is equal to or larger than 80 % of said distance. Preferably the height of the air guiding plate above the support member is equal to or larger than 90% of said distance. Accordingly, the air guiding plate is arranged to substantially prevent an air flow from the carrier with the air guiding plate to an adjacent carrier within one storey of the multi-storey food processing apparatus.

In an embodiment, the through openings in the lower heat exchange element of a first storey in said food processing apparatus are vertically out of line with the through openings in the upper heat exchange element of a second storey in said food processing apparatus, which second story is adjacently below the first storey. By arranging the through openings of the adjacently lower heat exchange element and upper heat exchange element out of line, a more turbulent air flow and a mixing of the air flow is obtained between these adjacent heat exchange elements.

In an embodiment, the heat exchange plate comprises two profiled metal sheets which are arranged on top of each other, wherein the two profiled metal sheets are welded together at least around the through openings, and wherein the profiled metal sheets comprises diverging parts which provide the internal channels for a heat exchange fluid. Preferably the heat exchange plate comprises two substantially concentric weld lines around each through opening. Due to the double weld the heat exchange plate can withstand a higher internal pressure. In particular due to the double weld, a pressurized fluid can be introduced in between the two metal sheets, wherein the pressure of said pressurized fluid is increase for a short moment in time to a pressure level that is high enough to push the metal sheets apart at the non-welded parts to form the diverging parts. In addition the concentric double weld lines reduce the risk of a leakage of heat exchange fluid out of a heat exchange plate.

In an embodiment, the profiled metal sheets comprises a curved upper surface, preferably wherein the profiled metal sheets comprises a convex upper surface at least at the diverging parts. In an embodiment, the profiled metal sheets comprises a curved lower surface, preferably wherein the profiled metal sheets comprises a convex lower surface at least at the diverging parts. Preferably, the heat exchange plate is curved at both sides.

In an embodiment, the air supply device is arranged to switch the direction of the substantially vertical air flow through said number of storeys of the food processing apparatus. By controlling the direction of the air flow, it can be controlled whether or not, and also the duration of time that the substantial vertical air flow is directed towards the food products from the top side of a storey, or is introduced from the bottom side of a storey.

In addition or alternatively, the air supply device is arranged to provide a first section of the food processing apparatus with a substantially vertical air flow from the top down, and to provide a second section of the food processing apparatus with a substantially vertical air flow from the bottom up. Preferably, the first and second sections are arranged adjacent in a substantially horizontal direction.

According to a second aspect, the present invention provides an food processing apparatus for food products in accordance with claim 11. The food processing apparatus of the invention is characterized by heat exchange elements with through openings, which heat exchange elements are arranged to provide a substantially vertical flow path between the storeys of the food processing apparatus.

In an embodiment, the air supply device is arranged to switch the direction of the substantially vertical air flow through said number of storeys of the food processing apparatus.

In an embodiment, the air supply device is arranged to provide a first section of the food processing apparatus with a substantially vertical air flow from the top down, and to provide a second section of the food processing apparatus with a substantially vertical air flow from the bottom up. Preferably, the first and second sections are arranged adjacent in a substantially horizontal direction.

In an embodiment, the through openings in the lower heat exchange element of a first storey in said food processing apparatus are vertically out of line with the through openings in the upper heat exchange element of a second storey in said food processing apparatus, which second story is adjacently below the first storey.

In an embodiment, at least one of the upper or lower heat exchange elements comprises a heat exchange plate with internal channels for a heat exchange fluid.

In an embodiment, the heat exchange plate comprises two profiled metal sheets which are arranged on top of each other, wherein the two profiled metal sheets are welded together at least around the through openings, and wherein the profiled metal sheets comprises diverging parts which provide the internal channels for the heat exchange fluid.

In an embodiment, the profiled metal sheets comprise a curved upper surface. Preferably, the profiled metal sheets comprise a convex upper surface at least at the diverging parts.

In an embodiment, the profiled metal sheets comprise a curved lower surface. Preferably, the profiled metal sheets comprise a convex lower surface at least at the diverging parts.

In an embodiment, the food processing apparatus comprises an oven or a cooling cabinet.

According to a third aspect, the present invention provides a carrier for food products as claimed in claim 13.

In an embodiment, the air guiding opening is provided between the support member and the air guiding plate.

In an embodiment, the air guiding plate extends substantially over the full width of the leading and/or trailing edge of the carrier.

In an embodiment, the support member is a substantially closed plate, preferably wherein the support member is a stone plate.

According to a fourth aspect, the present invention provides a method for the processing of food products as claimed in claim 15.

### BRIEF DESCRIPTION OF THE DRAWINGS

The invention will be elucidated on the basis of an exemplary embodiment shown in the attached drawings, in which:
Figure 1 shows a schematic cross section in longitudinal direction of a food processing assembly of the invention,
Figure 2 shows a schematic cross section of the assembly of figure 1 in a transverse direction,
Figure 3 shows a schematic cross section of a first example of a carrier arranged in a storey of the food processing apparatus,
Figure 4 shows a more detailed view of the part IV of figure 3,
Figure 5 shows a schematic cross section of a second example of a carrier arranged in a storey of the food processing apparatus,
Figure 6 shows a schematic cross section of an air supply device arranged to provide an air flow in a fist direction,
Figure 7 shows a schematic cross section of the air supply device of figure 6 arranged to provide an air flow in a second direction opposite to the first direction, and
Figure 8 shows a schematic cross section of a heating plate for use in the food processing apparatus of the present invention.

### DETAILED DESCRIPTION OF THE INVENTION

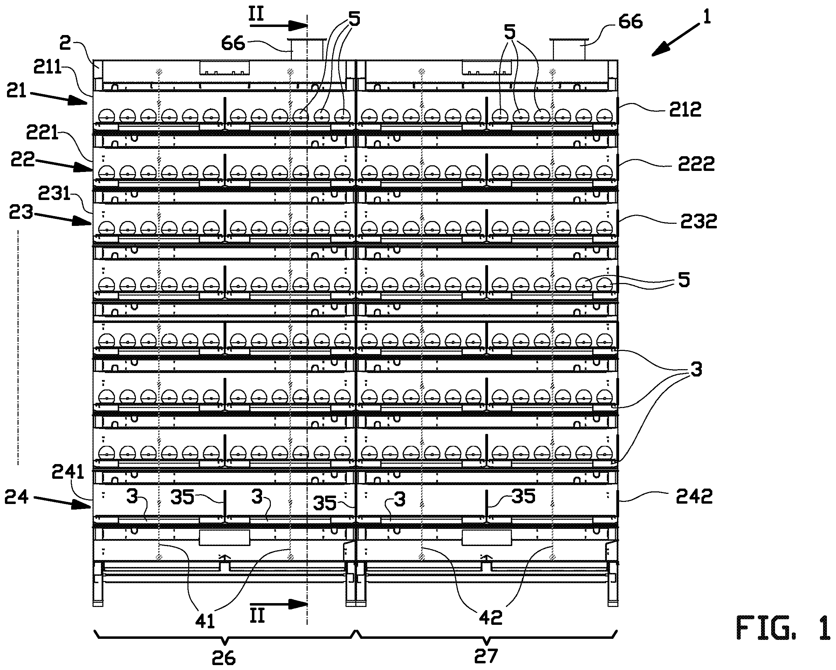

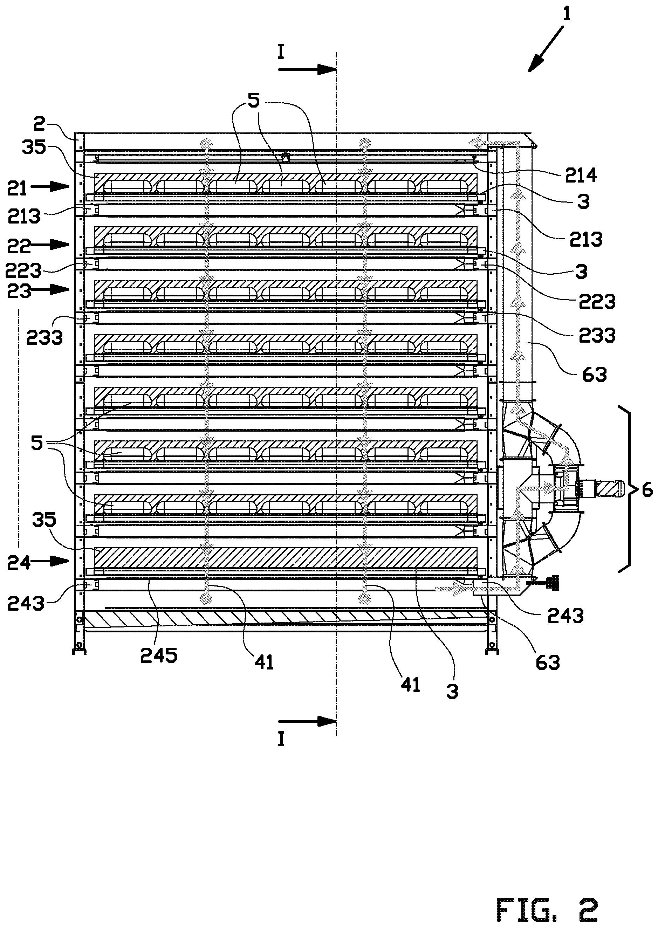

Figures 1 and 2 show an example of a food processing assembly 1 according to the invention. The food processing assembly 1 comprises a food processing apparatus 2 for food products, in particular dough products, and a number of carriers 3 for the food products, such as dough pieces 5.

The food processing apparatus 2 comprises a number of storeys 21, 22, 23,...,24 situated above one another. As schematically shown in figure 1, each storey or level is provided with an entrance 211,221, 231,...,241 for carriers 3 at a first side of the food processing apparatus 2, and an exit 212, 222, 232,...,242 for carriers 3 at a second side of said food processing apparatus 2 situated opposite the first side.

As schematically shown in figure 2, each storey 21, 22, 23,...,24 is provided with a guidance device 213,223, 233,...,243 for guiding the carriers 3 from the entrance 211, 221, 231,...,241 to the exit 212, 222, 232,..., 242. In the present example the guidance device 213, 223, 233,...,243 comprises a support member which extends from the entrance 211,221, 231,...,241 to the exit 212, 222, 232,...,242 which are arranged to support the sides of the carriers 3 arranged between the leading and trailing ends. The carriers 3 are arranged to slide over the support members for example as described in more detail in WO 2010/014006. The successive carriers 3 in a specific storey are uncoupled for example, and the food processing apparatus 2 is provided with a pushing device for pushing the coupled carriers 3 through the food processing apparatus 2. In an alternative example, the successive carriers 3 in a specific storey are coupled, and the food processing apparatus 2 is provided with a pulling device for pulling the coupled carriers 3 through the food processing apparatus 2, for example as described in more detail in DE 44 20 467. In a further alternative example, each storey 21, 22, 23,...,24 of said food processing apparatus 2 is provided with a conveyor for conveying the carriers 3 through the storeys of said food processing apparatus 2.

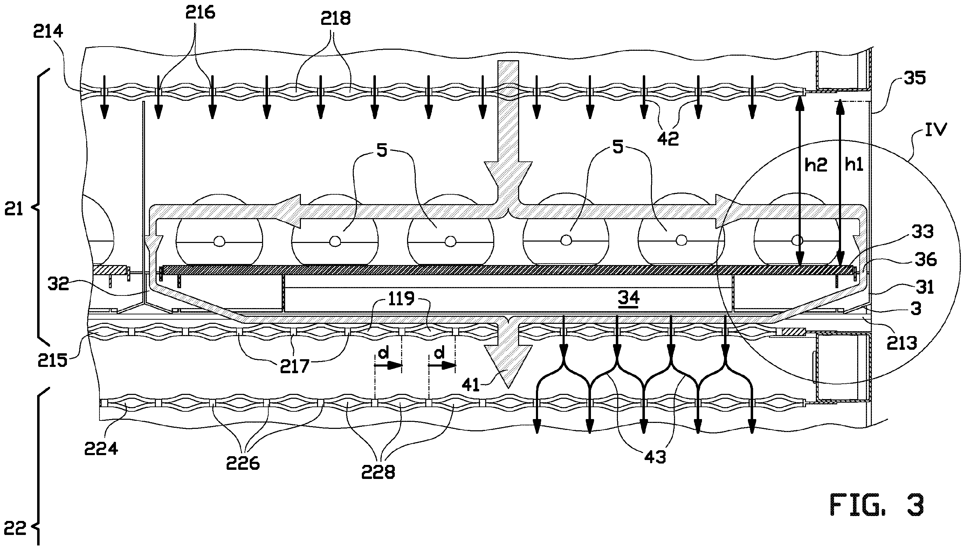

Each one of the storeys 21, 22, 23,...,24 is provided with an upper heat exchange element 214, 224, 234,...,244 and a lower heat exchange element 215, 225, 235,..., 245 in between which the carriers 3 with food products can pass. As more clearly indicated in figure 3, the upper heat exchange elements 214,224 and lower heat exchange elements 215 are provided with through openings 216,217,226. In between the lower heat exchange element 215 of a storey 21 and the upper heat exchange element 224 of the neighbouring storey 22 below the storey 21, a flow path is provided to facilitate a substantial vertical flow of air 41. The through openings 217 in the lower heat exchange element 215 of the storey 21 in said food processing apparatus 2 are a shifted over a distance d in horizontal direction with respect to the through openings 226 in the upper heat exchange element 224 of the neighbouring storey 22 below the storey 21. Accordingly, the through openings 217 in the lower heat exchange element 215 of the storey 21 are vertically out of line with the through openings 226 in the upper heat exchange element 224 of the neighbouring storey 22 adjacently below the storey 21. By arranging the through openings of the adjacently lower heat exchange element 215 and upper heat exchange element 224 out of line, a more turbulent air flow and/or a mixing of the air flow 43 is obtained between these adjacent heat exchange elements.

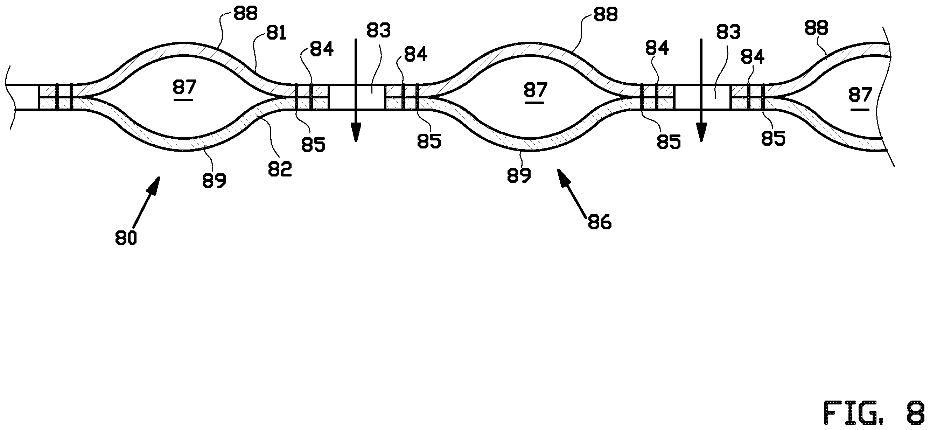

As schematically indicated in figure 3, the heat exchange elements 214,215,224 comprises a heat exchange plate with internal channels 218,219,228 for a heat exchange fluid. In case the food processing apparatus 2 is an oven, the heat exchange fluid is a heating fluid. In case the food processing apparatus 2 is a cooling cabinet, the heat exchange fluid is a cooling fluid. The heat exchanged plate is described in more detail below with reference to figure 8.

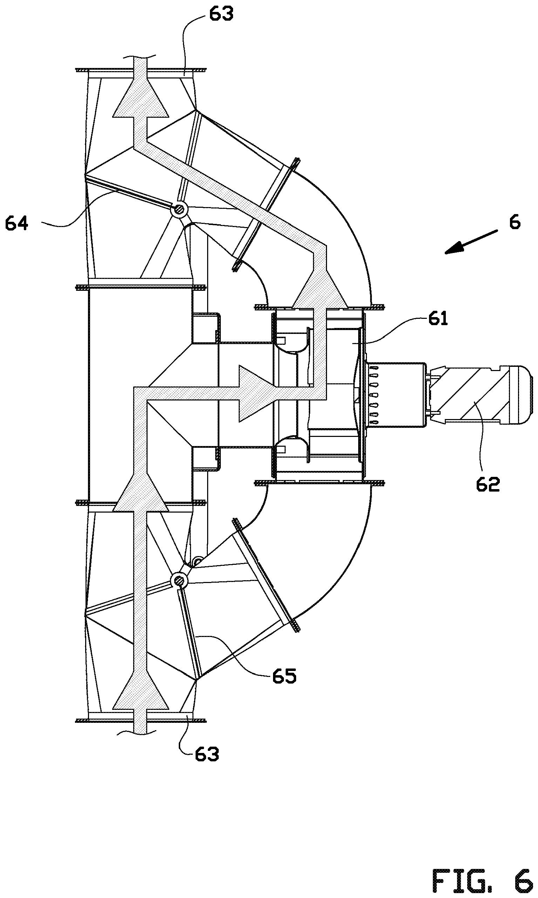

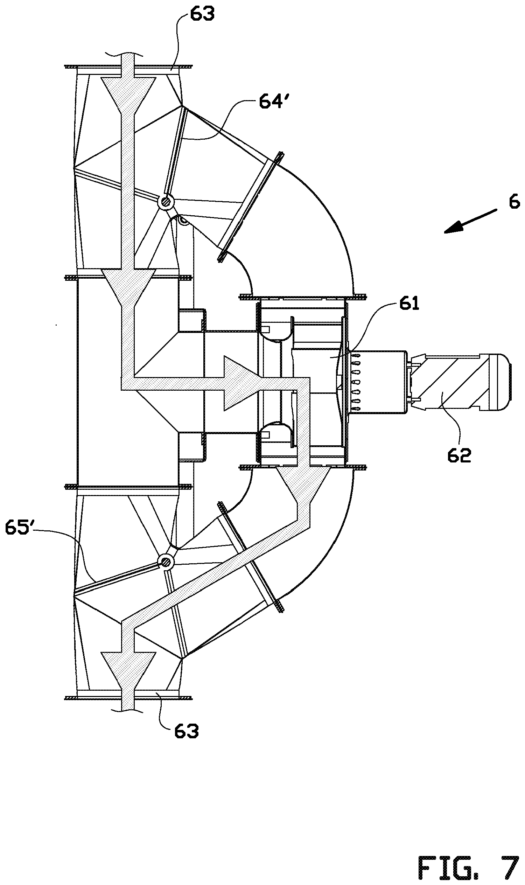

As schematically indicated in figure 2, the food processing apparatus comprises an air supply device 6, which is shown in more detail in figures 6 and 7. The air supply device 6 comprises a blower 61 driven by a motor 62, and air ducts 63 for providing a fluid connection from the blower 61 towards the upper storey 21 and the lower storey 24 of the food processing apparatus 2. The air supply device 6 is further provided with at least two valves 64, 65, which valves 64, 65 are arranged to switch the direction of the substantially vertical air flow through the storeys 21, 22, 23, 24 of the food processing apparatus 2:
When the valves 64, 65 are arranged in a first position as shown in figure 6, and the blower 61 is activated, air is drawn in from the lower storey 24 and supplied to the upper storey 21. Accordingly, the air supply device 6 is arranged to provide a substantially vertical airflow 41 from top to bottom through the storeys 21, 22, 23,...,24 of the food processing apparatus 2.
When the valves 64', 65' are arranged in a second position as shown in figure 7, and the blower 61 is activated, air is drawn in from the upper storey 21 and supplied to the lower storey 24. Accordingly, the air supply device 6 is arranged to provide a substantially vertical airflow 42 from bottom to the top through the storeys 21, 22, 23,...,24 of the food processing apparatus 2.

It is noted that the air supply device 6 can also be provided with a third valve (not shown) to connect the air ducts 63 with an input/output pipe 66 for introducing conditioned air into the food processing apparatus or for removing air out of the food processing apparatus, respectively.

As schematically shown in figure 1, the food processing apparatus of the example comprises two sections 26, 27 arranged adjacent in a substantially horizontal direction. Each of these sections is provided with its own air supply devices 6. Accordingly, direction and flow rate of the air flow through the storeys 21, 22, 23,...,24 of the two sections 26, 27 of food processing apparatus 2 can be set individually. For example, the air supply devices 6 are arranged to provide a substantially vertical air flow 41 from the top down in the first section 26 of the food processing apparatus 2, and to provide a substantially vertical air flow 41 from the bottom up in the second section 27 of the food processing apparatus 2.

Figure 3 shows a more detailed view of an example of a carrier 3 according to the invention. The carrier 3 comprises a substantially rectangular frame 34 comprising a leading end 31 and a trailing end 32, and a support member 33 for supporting the food products, in particular dough pieces 5. The support member 33 is attached to the rectangular frame 34, and comprises a substantially closed plate, preferably wherein the support member 33 is a stone plate.

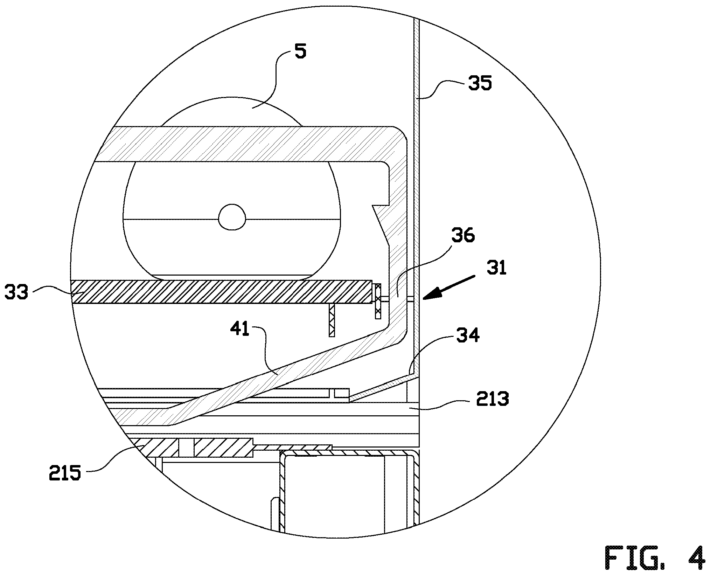

As also shown in the detail of figure 4, the frame 34 comprises an air guiding plate 35 at the leading end 31 of the frame 34. The air guiding plate 35 extends in a substantial vertical direction above the support member 33. The air guiding plate 35 is a part of the carrier 3 and as such is moved through the food processing apparatus 2 together with the carrier 3. The air guiding plate 35 extends substantially over the full width of the leading edge 31 of the carrier 3, as schematically indicated in figure 1. In addition, the height h1 of the air guiding plate 35 above the support member 33 is equal or larger than 50 % of the distance h2 between the support member 33 of a carrier 3 arranged in a storey 21 of the food processing apparatus 2 and the upper heat exchange element 214 of said storey 21. In order to restrict the horizontal air flow from one carrier 3 to an adjacent carrier as much as possible, it is preferred that the height h1 of the air guiding plate 35 above the support member 33 is equal or larger than 80 % of said distance h2, or even equal or larger than 90% of said distance h2.

As shown in more detail in figure 4, the carrier 3 comprises an air guiding opening 36 adjacent to the air guiding plate 35 for facilitating an air flow 41 from an upper side of the carrier 3 to a lower side of the carrier 3 or *vice versa.* The air guiding opening 36 is provided between the support member 33 and the air guiding plate 35.

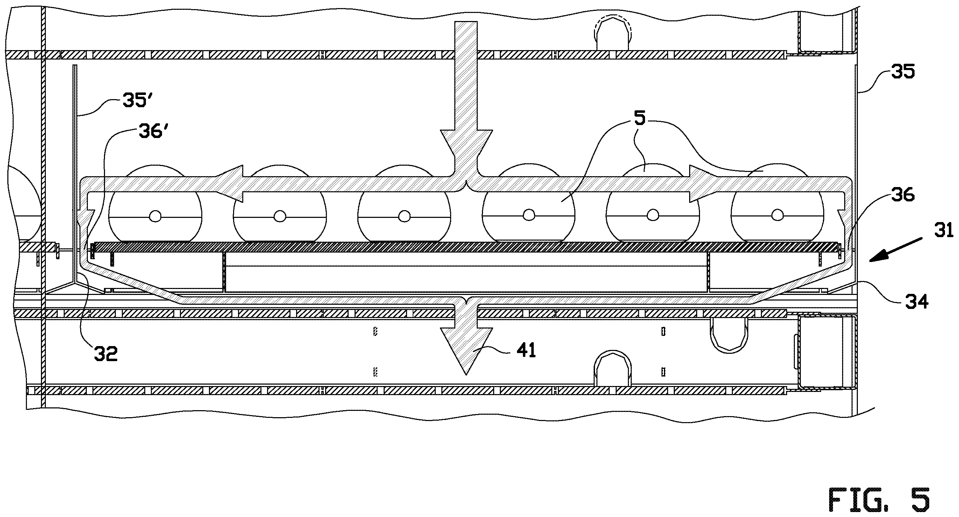

Instead of arranging the air guiding plate 35 at the leading edge 31, said air guiding plate 35 can also be arranged at the trailing edge 32. In an alternative example as shown in figure 5 both the leading edge 31 and the trailing edge 32 are provided with an air guiding plate 35, 35'. Also in this example, air guiding openings 36, 36' are provided adjacent to the air guiding plates 35, 35' for facilitating an air flow 41 from an upper side of the carrier to a lower side of the carrier or *vice versa.* The air guiding openings 36, 36' are provided between the support member 33 and the air guiding plates 35, 35'.

Figure 8 shows a cross section of an example of a heat exchange plate 80 comprises two profiled metal sheets 81, 82 which are arranged on top of each other. The two profiled metal sheets 81, 82 are welded together at least around the through openings 83. As schematically indicated, the heat exchange plate 80 comprises two substantially concentric weld lines 84, 85 which extend around each through opening 83.

As shown in figure 8, the profiled metal sheets 81, 82 comprises diverging parts 86 which provide the internal channels 87 for the heat exchange fluid. The diverging parts 86 provide a convex upper surface 88 and a convex lower surface 89.

It is respectfully noted, that this food processing apparatus 2 is shown in the above examples in combination with a carrier 3 provided with an air guiding plate 35, but is not limited thereto. The food processing apparatus 2 of the invention is characterized by heat exchange elements 214, 224, 234,..., 244 and 215, 225, 235,..., 245 with through openings, which heat exchange elements are arranged to provide a substantially vertical flow path 41, 42 between the storeys of the food processing apparatus.

It is to be understood that the above description is included to illustrate the operation of the preferred embodiments and is not meant to limit the scope of the invention. From the above discussion, many variations will be apparent to one skilled in the art that would yet be encompassed by the scope of the present invention as defined in the appended claims.

## Claims

1. Food processing assembly (1) comprising an food processing apparatus (2) for food products, in particular dough products, and a number of carriers (3) for the food products,
**characterized in that** said food processing apparatus comprising a number of storeys (21, 22, 23,...,24) situated above one another, wherein each storey is provided with an entrance (211,221, 231,...,241) for carriers at a first side of the food processing apparatus, an exit (212, 222, 232,..., 242) for carriers at a second side of said food processing apparatus situated opposite the first side, and a guidance device (213,223, 233,...,243) for guiding the carriers from the entrance to the exit, wherein each one of the storeys is provided with upper heat exchange elements (214, 224, 234,..., 244) and lower heat exchange elements (215, 225, 235,..., 245) in between which the carriers with food products can pass, wherein the upper heat exchange elements and lower heat exchange elements are provided with through openings (216,217,226), wherein in between the neighbouring storeys of said number of storeys a flow path is arranged to facilitate a substantial vertical flow of air (41), and wherein the food processing apparatus comprises an air supply device (6) which is adapted for in a substantially vertical direction supplying air to the upper or lower storey of said number of storeys,
wherein each carrier comprises a substantially rectangular frame (34) comprising a leading end (31) and a trailing end (32), and a support member (33) for supporting the food products, wherein the support member is attached to the rectangular frame, wherein the leading end and/or the trailing end of the frame is provided with an air guiding plate (35) for guiding the air in the food processing apparatus in a substantially vertical direction.

2. Food processing assembly according to claim 1, wherein the carrier comprises an air guiding opening (36) adjacent to the air guiding plate for facilitating an air flow from an upper side of the carrier to a lower side of the carrier or *vice versa,* preferably wherein the air guiding opening is provided between the support member and the air guiding plate.

3. Food processing assembly according to claim 1 or 2, wherein the air guiding plate extend substantially over the full width of the leading and/or trailing edge of the carrier.

4. Food processing assembly according to any one of the claims 1 - 3, wherein the height of the air guiding plate above the support member is equal or larger than 50 % of the distance between the support member of a carrier arranged in a storey of the food processing apparatus and the upper heat exchange elements of said storey, preferably wherein the height of the air guiding plate above the support member is equal or larger than 80 % of said distance, more preferably wherein the height of the air guiding plate above the support member is equal or larger than 90% of said distance.

5. Food processing assembly according to any one of the claims 1 - 4, wherein the through openings in the lower heat exchange element of a first storey in said food processing apparatus are vertically out of line with the through openings in the upper heat exchange element of a second storey in said food processing apparatus, which second storey is adjacently below the first storey.

6. Food processing assembly according to any one of the claims 1 - 5, wherein at least one of the upper or lower heat exchange elements comprises a heat exchange plate with internal channels (218,219,228) for a heat exchange fluid.

7. Food processing assembly according to claim 6, wherein the heat exchange plate (80) comprises two profiled metal sheets (81, 92) which are arranged on top of each other, wherein the two profiled metal sheets are welded together at least around the through openings, and wherein the profiled metal sheets comprises diverging parts (86) which provide the internal channels for the heat exchange fluid.

8. Food processing assembly according to claim 7, wherein the profiled metal sheets comprises a curved upper surface (88), preferably wherein the profiled metal sheets comprises a convex upper surface at least at the diverging parts, and/or wherein the profiled metal sheets comprises a curved lower surface (89), preferably wherein the profiled metal sheets comprises a convex lower surface at least at the diverging parts.

9. Food processing assembly according to any one of the preceding claims, wherein the air supply device is arranged to switch the direction of the substantially vertical air flow through said number of storeys of the food processing apparatus.

10. Food processing assembly according to any one of the preceding claims, wherein the air supply device is arranged to provide a first section (26) of the food processing apparatus with a substantially vertical air flow from the top down, and to provide a second section (27) of the food processing apparatus with a substantially vertical air flow from the bottom up, preferably wherein the first and second section are arranged adjacent in a substantially horizontal direction.

11. Food processing apparatus (2) for food products, in particular dough products, wherein the food processing apparatus comprises a number of storeys (21, 22, 23, ..., 24) situated above one another, wherein each storey is provided with an entrance (211, 221, 231, ..., 241) for carriers at a first side of the food processing apparatus, an exit (212, 222, 232, ..., 242) for carriers at a second side of said food processing apparatus situated opposite the first side, and a guidance device (213, 223, 233, ..., 243) for guiding the carriers from the entrance to the exit, wherein each one of the storeys is provided with upper heat exchange elements (214, 224, 234, ..., 244) and lower heat exchange elements (215, 225, 235, ..., 245) in between which the carriers with food products can pass, wherein the upper heat exchange elements and lower heat exchange elements are provided with through openings (216, 217, 226), wherein in between the neighbouring storeys of said number of storeys a flow path is arranged to facilitate a substantial vertical flow of air (41), and wherein the food processing apparatus comprises an air supply device which is adapted for in a substantially vertical direction supplying air to the upper or lower storey of said number of storeys.

12. Food processing apparatus according to claim 11, wherein the air supply device is arranged to switch the direction of the substantially vertical air flow through said number of storeys of the food processing apparatus, and/or wherein the air supply device is arranged to provide a first section of the food processing apparatus with a substantially vertical air flow from the top down, and to provide a second section of the food processing apparatus with a substantially vertical air flow from the bottom up, preferably wherein the first and second section are arranged adjacent in a substantially horizontal direction.

13. Carrier (3) for food products, in particular dough products, wherein the carrier comprises a substantially rectangular frame (34) comprising a leading end (31) and a trailing end (32), and a support member (33) for supporting the food products, wherein the support member (33) is attached to the rectangular frame (34), wherein the leading end and/or the trailing end of the frame is provided with an air guiding plate (35) which extends in a substantial vertical direction above the support member, wherein the carrier comprises an air guiding opening (36) adjacent to the air guiding plate (35) for facilitating an air flow from an upper side of the carrier to a lower side of the carrier or *vice versa.*

14. Carrier according to claim 13, wherein the air guiding opening is provided between the support member and the air guiding plate, preferably wherein the air guiding plate extend substantially over the full width of the leading and/or trailing edge of the carrier, preferably wherein the support member is a substantially closed plate, preferably wherein the support member is a stone plate.

15. method for the processing of food products, in particular dough products, using a food processing assembly according to any one of the claims 1 - 10.

## Patentansprüche

1. Eine Lebensmittelverarbeitungsanordnung (1), umfassend ein Lebensmittelverarbeitungsgerät (2) für Lebensmittelprodukte, insbesondere Teigprodukte, und eine Anzahl von Trägern (3) für die Lebensmittelprodukte,
dadurch charakterisiert, dass dieses Lebensmittelverarbeitungsgerät eine Anzahl von Etagen (21, 22, 23, ..., 24) umfasst, die übereinander angeordnet sind, wobei jede Etage mit einem Zugang (211, 221, 231, ..., 241) für die Träger an einer ersten Seite des Lebensmittelverarbeitungsgeräts, einem Ausgang (212, 222, 232, ... 242) für die Träger an einer zweiten Seite des Lebensmittelverarbeitungsgeräts, die der ersten Seite gegenüberliegt, und einer Führungsvorrichtung (213, 223, 233, ... 243) zum Führen der Träger von dem Zugang zu dem Ausgang versehen ist, wobei jede einzelne der Etagen mit oberen Wärmeaustauschelementen (214, 224, 234, ... 244) und unteren Wärmeaustauschelementen (215, 225, 235, ..., 245) versehen ist, zwischen denen die Träger mit den Lebensmittelprodukten hindurchgeführt werden können, wobei die oberen Wärmeaustauschelemente und die unteren Wärmeaustauschelemente mit durchgehenden Öffnungen (216, 217, 226) versehen sind, wobei zwischen den benachbarten Etagen dieser Anzahl von Etagen ein Fließweg angeordnet ist, um einen im Wesentlichen vertikalen Luftfluss (41) zu erleichtern, und wobei das Lebensmittelverarbeitungsgerät eine Luftzufuhrvorrichtung (6) umfasst, die dazu ausgelegt ist, Luft in einer im Wesentlichen vertikalen Richtung zu der oberen oder unteren Etage dieser Anzahl von Etagen zuzuführen,
wobei jeder Träger einen im Wesentlichen rechteckigen Rahmen (34), der ein vorderes Ende (31) und ein hinteres Ende (32) und ein Trageelement (33) zum Tragen der Lebensmittelprodukte, umfasst, wobei das Trageelement an den rechteckigen Rahmen angebracht ist, wobei das vordere Ende und/oder das hintere Ende des Rahmens mit einer Luftführungsplatte (35) zum Führen der Luft in dem Lebensmittelverarbeitungsgerät in im Wesentlichen vertikaler Richtung versehen ist.

2. Die Lebensmittelverarbeitungsanordnung gemäß Anspruch 1, wobei der Träger eine Luftführungsöffnung (36) umfasst, die an die Luftführungsplatte angrenzt, zum Erleichtern eines Luftflusses von einer oberen Seite des Trägers zu einer unteren Seite des Trägers oder andersherum, wobei bevorzugt die Luftführungsöffnung zwischen dem Trageelement und der Luftführungsplatte angebracht ist.

3. Die Lebensmittelverarbeitungsanordnung gemäß Anspruch 1 oder 2, wobei sich die Luftführungsplatte im Wesentlichen über die gesamte Breite der Vorder- und/oder Hinterkante des Trägers erstreckt.

4. Die Lebensmittelverarbeitungsanordnung gemäß einem der Ansprüche 1 bis 3, wobei die Höhe der Luftführungsplatte oberhalb des Trageelements gleich oder größer als 50 % des Abstands zwischen dem Trageelement eines Trägers, der in einer Etage des Lebensmittelverarbeitungsgeräts eingesetzt ist, und den oberen Wärmeaustauschelementen dieser Etage ist, wobei bevorzugt die Höhe der Luftführungsplatte oberhalb des Trageelements gleich oder größer als 80 % dieses Abstandes ist, weiter bevorzugt, wobei die Höhe der Luftführungsplatte oberhalb des Trageelements gleich oder größer als 90 % dieses Abstandes ist.

5. Die Lebensmittelverarbeitungsanordnung gemäß einem der Ansprüche 1 bis 4, wobei die durchgehenden Öffnungen in dem unteren Wärmeaustauschelement einer ersten Etage in diesem Lebensmittelverarbeitungsgerät mit den durchgehenden Öffnungen in dem oberen Wärmeaustauschelement einer zweiten Etage in diesem Lebensmittelverarbeitungsgerät, die direkt unterhalb der ersten Etage liegt, in vertikaler Richtung nicht in einer Linie stehen.

6. Die Lebensmittelverarbeitungsanordnung gemäß einem der Ansprüche 1 bis 5, wobei wenigstens eines der oberen oder unteren Wärmeaustauschelemente eine Wärmeaustauschplatte mit darinliegenden Kanälen (218, 219, 228) für ein Wärmeaustauschfluid umfasst.

7. Die Lebensmittelverarbeitungsanordnung gemäß Anspruch 6, wobei die Wärmeaustauschplatte (80) zwei profilierte Metallbleche (81, 92) umfasst, die übereinander angeordnet sind, wobei die beiden profilierten Metallbleche wenigstens um die durchgehenden Öffnungen herum miteinander verschweißt sind, und wobei die profilierten Metallbleche auseinanderklaffende Teile (86) aufweisen, die die darinliegenden Kanäle für das Wärmeaustauschfluid bereitstellen.

8. Die Lebensmittelverarbeitungsanordnung gemäß Anspruch 7, wobei die profilierten Metallbleche eine gebogene obere Oberfläche (88) umfassen, wobei bevorzugt die profilierten Metallbleche wenigstens an den auseinanderklaffenden Teilen eine konvexe obere Oberfläche umfassen und/oder wobei die profilierten Metallbleche eine gebogene untere Oberfläche (89) umfassen, wobei bevorzugt die profilierten Metallbleche wenigstens an den auseinanderklaffenden Teilen eine konvexe untere Oberfläche umfassen.

9. Die Lebensmittelverarbeitungsanordnung gemäß einem der vorhergehenden Ansprüche, wobei die Luftzufuhrvorrichtung dazu ausgelegt ist, die Richtung des im Wesentlichen vertikalen Luftflusses durch die Anzahl von Etagen des Lebensmittelverarbeitungsgeräts umzudrehen.

10. Die Lebensmittelverarbeitungsanordnung gemäß einem der vorhergehenden Ansprüche, wobei die Luftzufuhrvorrichtung dazu ausgelegt ist, einen ersten Abschnitt (26) des Lebensmittelverarbeitungsgeräts mit einem im Wesentlichen vertikalen Luftfluss von oben nach unten zu versorgen und einen zweiten Abschnitt (27) des Lebensmittelverarbeitungsgeräts mit einem im Wesentlichen vertikalen Luftfluss von unten nach oben zu versorgen, wobei bevorzugt der erste und der zweite Abschnitt in einer im Wesentlichen horizontalen Richtung aneinandergrenzend angeordnet sind.

11. Lebensmittelverarbeitungsgerät (2) für Lebensmittelprodukte, insbesondere Teigprodukte, wobei das Lebensmittelverarbeitungsgerät eine Anzahl von Etagen (21, 22, 23, ..., 24), die übereinander angebracht sind, umfasst, wobei jede Etage mit einem Zugang (211, 221, 231, ..., 241) für Träger an einer ersten Seite des Lebensmittelverarbeitungsgeräts, einem Ausgang (212, 222, 232, ..., 242) für Träger an einer zweiten Seite des Lebensmittelverarbeitungsgeräts, die der ersten Seite gegenüber angeordnet ist, und einer Führungsvorrichtung (213, 223, 233, ..., 243) zum Führen der Träger von dem Zugang zu dem Ausgang, versehen ist, wobei jede einzelne der Etagen mit oberen Wärmeaustauschelementen (214, 224, 234, ..., 244) und unteren Wärmeaustauschelementen (215, 225, 235, ..., 245), zwischen denen die Träger mit den Lebensmittelprodukten hindurchgeführt werden können, versehen ist, wobei die oberen Wärmeaustauschelemente und die unteren Wärmeaustauschelemente mit durchgehenden Öffnungen (216, 217, 226) versehen sind, wobei zwischen den benachbarten Etagen der Anzahl von Etagen ein Fließweg angeordnet ist, um einen im Wesentlichen vertikalen Luftfluss (41) zu erleichtern, und wobei das Lebensmittelverarbeitungsgerät eine Luftzufuhrvorrichtung umfasst, die dazu ausgelegt ist, Luft in einer im Wesentlichen vertikalen Richtung zu der oberen oder unteren Etage dieser Anzahl von Etagen zuzuführen.

12. Das Lebensmittelverarbeitungsgerät gemäß Anspruch 11, wobei die Luftzufuhrvorrichtung so angeordnet ist, dass sie die Richtung des im Wesentlichen vertikalen Luftflusses durch die Anzahl der Etagen des Lebensmittelverarbeitungsgeräts umkehrt, und/oder wobei die Luftzufuhrvorrichtung so angeordnet ist, dass sie einen ersten Abschnitt des Lebensmittelverarbeitungsgeräts mit einem im Wesentlichen vertikalen Luftfluss von oben nach unten versorgt und einen zweiten Abschnitt des Lebensmittelverarbeitungsgeräts mit einem im Wesentlichen vertikalen Luftfluss von unten nach oben versorgt, wobei bevorzugt der erste und der zweite Abschnitt in einer im Wesentlichen horizontalen Richtung aneinander angrenzend angeordnet sind.

13. Träger (3) für Lebensmittelprodukte, insbesondere Teigprodukte, wobei der Träger einen im Wesentlichen rechteckigen Rahmen (34), der ein vorderes Ende (31) und ein hinteres Ende (32) und ein Trageelement (33) zum Tragen der Lebensmittelprodukte, umfasst, wobei das Trageelement (33) an den rechteckigen Rahmen (34) angebracht ist, wobei das vordere Ende und/oder das hintere Ende des Rahmens mit einer Luftführungsplatte (35) versehen ist, die sich in einer im Wesentlichen vertikalen Richtung oberhalb des Trageelements erstreckt, wobei der Träger eine Luftführungsöffnung (36), angrenzend an die Luftführungsplatte (35) zum Erleichtern eines Luftflusses von einer oberen Seite des Trägers zu einer unteren Seite des Trägers oder umgekehrt, umfasst.

14. Träger gemäß Anspruch 13, wobei die Luftführungsöffnung zwischen dem Trageelement und der Luftführungsplatte angebracht ist, wobei sich die Luftführungsplatte bevorzugt im Wesentlichen über die gesamte Breite des vorderen und/oder des hinteren Endes des Trägers erstreckt, wobei bevorzugt das Trageelement eine im Wesentlichen geschlossene Platte ist, wobei bevorzugt das Trageelement eine Steinplatte ist.

15. Verfahren zum Verarbeiten von Lebensmittelprodukten, insbesondere Teigprodukten, unter Anwendung einer Lebensmittelverarbeitungsvorrichtung gemäß einem der Ansprüche 1 bis 10.

## Revendications

1. Ensemble de traitement d'aliments (1) comprenant un appareil de traitement d'aliments (2) pour des produits alimentaires, en particulier des produits à base de pâte, et un certain nombre de supports (3) pour les produits alimentaires,
**caractérisé en ce que** ledit appareil de traitement d'aliments comprend un certain nombre d'étages (21, 22, 23, .., 24) situés les uns au-dessus des autres, dans lequel chaque étage est prévu avec une entrée (211, 221, 231, ..., 241) pour les supports au niveau d'un premier côté de l'appareil de traitement d'aliments, une sortie (212, 222, 232, ..., 242) pour des supports au niveau d'un second côté dudit appareil de traitement d'aliments situé à l'opposé du premier côté, et un dispositif de guidage (213, 223, 233, ..., 243) pour guider les supports de l'entrée à la sortie, dans lequel chacun des étages est prévu avec des éléments d'échange de chaleur supérieurs (214, 224, 234, ..., 244) et des éléments d'échange de chaleur inférieurs (215, 225, 235, ..., 245) entre lesquels les supports avec les produits alimentaires peuvent passer, dans lequel les éléments d'échange de chaleur supérieurs et les éléments d'échange de chaleur inférieurs sont prévus avec des ouvertures débouchantes (216, 217, 226), dans lequel, entre les étages voisins dudit nombre d'étages, une trajectoire d'écoulement est agencée pour faciliter un écoulement d'air (41) sensiblement vertical, et dans lequel l'appareil de traitement d'aliments comprend un dispositif d'alimentation en air (6) qui est adapté pour, dans une direction sensiblement verticale, fournir l'air à l'étage supérieur ou inférieur dudit nombre d'étages,
dans lequel chaque support comprend un cadre (34) sensiblement rectangulaire comprenant une extrémité avant (31) et une extrémité arrière (32), et un élément de support (33) pour supporter les produits alimentaires, dans lequel l'élément de support est fixé sur le cadre rectangulaire, dans lequel l'extrémité avant et/ou l'extrémité arrière du cadre est prévue avec une plaque de guidage d'air (35) pour guider l'air dans l'appareil de traitement d'aliments dans une direction sensiblement verticale.

2. Ensemble de traitement d'aliments selon la revendication 1, dans lequel le support comprend une ouverture de guidage d'air (36) adjacente à la plaque de guidage d'air pour faciliter un écoulement d'air à partir d'un côté supérieur du support jusqu'à un côté inférieur du support ou vice versa, de préférence dans lequel l'ouverture de guidage d'air est prévue entre l'élément de support et la plaque de guidage d'air.

3. Ensemble de traitement d'aliments selon la revendication 1 ou 2, dans lequel la plaque de guidage d'air s'étend sensiblement sur toute la largeur du bord avant et/ou arrière du support.

4. Ensemble de traitement d'aliments selon l'une quelconque des revendications 1 à 3, dans lequel la hauteur de la plaque de guidage d'air au-dessus de l'élément de support est égale ou supérieure à 50 % de la distance entre l'élément de support d'un support agencé dans un étage de l'appareil de traitement d'aliments et les éléments d'échange de chaleur supérieurs dudit étage, de préférence dans lequel la hauteur de la plaque de guidage d'air au-dessus de l'élément de support est égale ou supérieure à 80 % de ladite distance, plus préférablement dans lequel la hauteur de la plaque de guidage d'air au-dessus de l'élément de support est égale ou supérieure à 90 % de ladite distance.

5. Ensemble de traitement d'aliments selon l'une quelconque des revendications 1 à 4, dans lequel les ouvertures débouchantes dans l'élément d'échange de chaleur inférieur d'un premier étage dans ledit appareil de traitement d'aliments sont verticalement désalignées par rapport aux ouvertures débouchantes dans l'élément d'échange de chaleur supérieur d'un second étage dans ledit appareil de traitement d'aliments, lequel second étage est adjacent au-dessous du premier étage.

6. Ensemble de traitement d'aliments selon l'une quelconque des revendications 1 à 5, dans lequel au moins l'un des éléments d'échange de chaleur supérieurs ou inférieurs comprend une plaque d'échange de chaleur avec des canaux internes (218, 219, 228) pour un fluide d'échange de chaleur.

7. Ensemble de traitement d'aliments selon la revendication 6, dans lequel la plaque d'échange de chaleur (80) comprend deux feuilles métalliques profilées (81, 92) qui sont agencées l'une au-dessus de l'autre, dans lequel les deux feuilles métalliques profilées sont soudées ensemble au moins autour des ouvertures débouchantes, et dans lequel les feuilles métalliques profilées comprennent des parties divergentes (86) qui fournissent les canaux internes pour le fluide d'échange de chaleur.

8. Ensemble de traitement d'aliments selon la revendication 7, dans lequel les feuilles métalliques profilées comprennent une surface supérieure incurvée (88), de préférence dans lequel les feuilles métalliques profilées comprennent une surface supérieure convexe au moins au niveau des parties divergentes, et/ou dans lequel les feuilles métalliques profilées comprennent une surface inférieure incurvée (89), de préférence dans lequel les feuilles métalliques profilées comprennent une surface inférieure convexe au moins au niveau des parties divergentes.

9. Ensemble de traitement d'aliments selon l'une quelconque des revendications précédentes, dans lequel le dispositif d'alimentation en air est agencé pour commuter la direction de l'écoulement d'air sensiblement vertical à travers ledit nombre d'étages de l'appareil de traitement d'aliments.

10. Ensemble de traitement d'aliments selon l'une quelconque des revendications précédentes, dans lequel le dispositif d'alimentation en air est agencé pour fournir à une première section (26) de l'appareil de traitement d'aliments un écoulement d'air sensiblement vertical de haut en bas, et pour fournir à une seconde section (27) de l'appareil de traitement d'aliments un écoulement d'air sensiblement vertical de bas en haut, de préférence dans lequel les première et seconde sections sont agencées de manière adjacente dans une direction sensiblement horizontale.

11. Appareil de traitement d'aliments (2) pour produits alimentaires, en particulier des produits à base de pâte, dans lequel l'appareil de traitement d'aliments comprend un certain nombre d'étages (21, 22, 23, ..., 24) situés les uns au-dessus des autres, dans lequel chaque étage est prévu avec une entrée (211, 221, 231, ..., 241) pour des supports au niveau d'un premier côté de l'appareil de traitement d'aliments, une sortie (212, 222, 232, ..., 242) pour des supports au niveau d'un second côté dudit appareil de traitement d'aliments situé à l'opposé au premier côté, et un dispositif de guidage (213, 223, 233, ..., 243) pour guider les supports de l'entrée à la sortie, dans lequel chacun des étages est prévu avec des éléments d'échange de chaleur supérieurs (214, 224, 234, ..., 244) et des éléments d'échange de chaleur inférieurs (215, 225, 235, ..., 245) entre lesquels les supports avec les produits alimentaires peuvent passer, dans lequel les éléments d'échange de chaleur supérieurs et les éléments d'échange de chaleur inférieurs sont prévus avec des ouvertures débouchantes (216, 217, 226), dans lequel, entre les étages voisins dudit nombre d'étages, une trajectoire d'écoulement est agencée pour faciliter un écoulement d'air (41) sensiblement vertical, et dans lequel l'appareil de traitement d'aliments comprend un dispositif d'alimentation en air qui est adapté pour, dans une direction sensiblement verticale, fournir l'air à l'étage supérieur ou inférieur dudit nombre d'étages.

12. Appareil de traitement d'aliments selon la revendication 11, dans lequel le dispositif d'alimentation en air est agencé pour commuter la direction de l'écoulement d'air sensiblement vertical à travers ledit nombre d'étages de l'appareil de traitement d'aliments, et/ou dans lequel le dispositif d'alimentation en air est agencé pour fournir à une première section de l'appareil de traitement d'aliments un écoulement d'air sensiblement vertical de haut en bas, et pour fournir à une seconde section de l'appareil de traitement d'aliments un écoulement d'air sensiblement vertical de bas en haut, de préférence dans lequel les première et seconde sections sont agencées de manière adjacente dans une direction sensiblement horizontale.

13. Support (3) pour produits alimentaires, en particulier des produits à base de pâte, dans lequel le support comprend un cadre (34) sensiblement rectangulaire comprenant une extrémité avant (31) et une extrémité arrière (32), et un élément de support (33) pour supporter les produits alimentaires, dans lequel l'élément de support (33) est fixé sur le cadre (34) rectangulaire, dans lequel l'extrémité avant et/ou l'extrémité arrière du cadre est prévue avec une plaque de guidage d'air (35) qui s'étend dans une direction sensiblement verticale au-dessus de l'élément de support, dans lequel le support comprend une ouverture de guidage d'air (36) adjacente à la plaque de guidage d'air (35) pour faciliter un écoulement d'air d'un côté supérieur du support à un côté inférieur du support ou vice versa.

14. Support selon la revendication 13, dans lequel l'ouverture de guidage d'air est prévue entre l'élément de support et la plaque de guidage d'air, de préférence dans lequel la plaque de guidage d'air s'étend sensiblement sur toute la largeur du bord avant et/ou arrière du support, de préférence dans lequel l'élément de support est une plaque sensiblement fermée, de préférence dans lequel l'élément de support est une plaque en pierre.

15. Procédé pour le traitement de produits alimentaires, en particulier de produits à base de pâte, utilisant un ensemble de traitement d'aliments selon l'une quelconque des revendications 1 à 10.
